# EUROPÄISCHE PATENTSCHRIFT

(11) **EP 3 493 945 B1**
(45) Veröffentlichungstag und Bekanntmachung des Hinweises auf die Patenterteilung: **24.08.2022**
(21) Anmeldenummer: 17742444.7
(22) Anmeldetag: 26.07.2017
(51) Int. Cl.: B23Q 3/06, B21D 28/00, B21D 45/00, B30B 1/00, F15B 7/00, B30B 1/26, B30B 15/00

(54) **VORRICHTUNGEN UND VERFAHREN ZUR BEARBEITUNG EINES WERKSTÜCKS**
DEVICES AND METHOD FOR MACHINING A WORKPIECE
DISPOSITIFS ET PROCEDE D'USINAGE D'UNE PIECE USINEE

(30) Priorität: 05.08.2016 EP 16183048
(43) Veröffentlichungstag der Anmeldung: 12.06.2019
(73) Patentinhaber: Technische Universität München, 80333 München (DE)
(72) Erfinder: BENKERT, Tim, 82194 Gröbenzell (DE); FEISTLE, Martin, 89331 Burgau (DE); KOPP, Thomas, 94315 Straubing (DE); GOLLE, Roland, 85435 Erding (DE)
(74) Vertreter: Lucke, Andreas
(86) Internationale Anmeldenummer: PCT/EP2017/068824
(87) Internationale Veröffentlichungsnummer: WO 2018/024554

(56) Entgegenhaltungen:
- FR-A1- 2 487 703
- GB-A- 2 053 364
- US-A- 4 030 391
- US-A- 4 321 818
- US-A1- 2002 104 207
- US-A1- 2007 084 357

## Beschreibung

### GEBIET

Die vorliegende Erfindung betrifft das Gebiet der mechanischen Bearbeitung eines Werkstücks mit einer Werkzeugmaschine.

### HINTERGRUND

Bei der mechanischen Bearbeitung eines Werkstücks mit einer Werkzeugmaschine werden oftmals zur Erhöhung des Werkstückdurchsatzes mehrere Bearbeitungsschritte parallel durchgeführt. So werden bspw. bei der mechanischen Bearbeitung eines Werkstücks mit Aktivelementen mehrere Scherschneid- und Umformschritte in einem Bewegungszyklus ausgeführt, indem eine Aktivelementaufnahme einer Werkzeugmaschine mit mehreren Aktivelementen bestückt wird, die dann in einer Bewegung gegen das Werkstück geführt werden.

Das Führen verschiedener Aktivelemente in einer Bewegung gegen das Werkstück kann aber auch Nachteile mit sich bringen, insofern als unterschiedliche Bearbeitungsverfahren oftmals unterschiedliche Anforderungen an den Bewegungsablauf des jeweiligen Aktivelements stellen, was zu einem unbefriedigenden Kompromiss zwischen sich zuwiderlaufenden Anforderungen führen kann.

US 4,030,391, auf dem der Oberbegriff der Ansprüche 1 und 8 basiert ist, offenbart eine doppeltwirkende hydraulische Presse mit zwei Antrieben.

Ein Niederhalterstößel wird mittels einer Druckluftquelle über die Stößel angetrieben. Ein Ziehstößel wird über eine separate Hydraulikquelle angetrieben.

FR 2 487 703 beschreibt eine zweifachwirkende hydraulische Presse, wobei ein Ziehstößel und ein Niederhalterstößel aus einer Hydraulikquelle gespeist werden. Unterschiedliche Niederhalter- und Ziehstößelkräfte sind über Regelventile einstellbar, welche den Druck des Niederhalterstößels über einen begrenzten Ölrückfluss steuern. Der Ziehstößel wird über eine Schwenkbewegung eines Hebelarms um eine Drehachse an der Oberseite der Vorrichtung angetrieben.

US 2002/0104207 A1 offenbart einen Bohrer mit einem Niederhalterelement, wobei der Bohrer relativ zu dem Niederhalterelement verschiebbar ist. Im Einsatz wird ein Werkstück von dem Niederhalterelement festgehalten und der Bohrer anschließend durch eine Aussparung in dem Niederhalterelement gefahren, um eine genaue Positionierung eines Bohrlochs zu erlauben.

US 4,321,818 offenbart eine zweifachwirkende hydraulische Schmiedepresse, wobei ein Niederhalterstößel zum Zuhalten eines Gesenks verwendet wird und ein Ziehstößel dann die eigentliche Umformoperation übernimmt. Der Niederhalterstößel und der Ziehstößel werden über einen gemeinsamen hydraulischen Antrieb betätigt.

US 2007/0084357 A1 offenbart eine Spindelpresse, welche ein hydraulisches Element umfasst. Durch eine Drehung einer Spindel wird ein Kolben der hydraulischen Presse bewegt, um ein Werkstück umzuformen.

### ZUSAMMENFASSUNG

Dieser und andere Nachteile werden durch eine erfindungsgemäße Werkzeugmaschine gemäß Anspruch 1, einen erfindungsgemäßen geschwindigkeitsübersetzenden Scherschneid- oder Umformaktivelementeinsatz gemäß Anspruch 6 und ein erfindungsgemäßes Verfahren gemäß Anspruch 8 überwunden.

Der Begriff "Bewegungszyklus" ist in diesem Zusammenhang so zu verstehen, dass durch eine in der Werkzeugmaschine vorgesehene Führung eine Bewegung der ersten Aktivelementaufnahme vorgegeben wird, die am Anfang des Bewegungszyklus von einem Ausgangszustand ausgehend, am Ende des Bewegungszyklus wieder in diesem endet, wobei sich an das Ende des Bewegungszyklus typischerweise ein weiterer Bewegungszyklus anschließt. Während der ersten Phase des Bewegungszyldus wird das Werkstück durch Aktivelemente bearbeitet und zwischen ersten Phasen aufeinanderfolgender Bewegungszyklen gegen ein nächstes zu bearbeitendes Werkstück ausgetauscht. Ferner ist der Begriff "Geschwindigkeitsübersetzungseinheit" breit zu verstehen, als eine Einheit, die eine Antriebsgeschwindigkeit in eine von der Antriebsgeschwindigkeit unterschiedliche Abtriebsgeschwindigkeit übersetzt. Ferner soll sowohl die Möglichkeit eines lösbar mit der zweiten Aktivelementaufnahme verbundenen Aktivelements als auch eines fest mit der zweiten Aktivelementaufnahme verbundenen Aktivelements umfasst sein.

Die Verwendung eines hydraulischen Kraft-/Wegwandlers ermöglicht eine Aktivelement-individuelle Kraft-/Geschwindigkeitsübersetzung. Zudem kann durch Wahl des Hydraulikfluidums hinsichtlich dessen Kompressibilität eine Krafteinwirkung auf das Werkstück gedämpft werden. Ferner können bei zyklischen Prozessen aufkeimende Schwingungen durch Wahl der Fluidführung im Kraft-/Wegwandler gedämpft werden. In diesem Zusammenhang sei außerdem erwähnt, dass der Begriff "Hydraulikfluidum" breit zu verstehen ist und auch ein Gemenge bzw. eine Mischung unterschiedlicher Hydraulikfluida umfassen soll.

Vorzugsweise ist die mindestens eine Geschwindigkeitsübersetzungseinheit dazu eingerichtet, eine maximale Relativgeschwindigkeit zwischen der zweiten Aktivelementaufnahme und dem ersten Aktivelement während der ersten Phase des Bewegungszyklus im Vergleich zu einer maximalen Relativgeschwindigkeit zwischen der ersten Aktivelementaufnahme und dem ersten Aktivelement während der ersten Phase des Bewegungszyldus zu reduzieren oder zu erhöhen.

Die Geschwindigkeitsübersetzungseinheit ermöglicht es somit, die Geschwindigkeit, mit der ein Aktivelement, das an der zweiten Aktivelementaufnahme angebracht ist, gegen das Werkstück geführt wird, im Vergleich zu der Geschwindigkeit, mit der das Aktivelement gegen das Werkstück geführt werden würde, wenn es an der ersten Aktivelementaufnahme angebracht wäre, zu reduzieren oder zu erhöhen. Durch das Reduzieren der Geschwindigkeit kann bspw. beim Umformverfahren die Qualität der eingebrachten Geometrie verbessert werden. Durch das Erhöhen der Geschwindigkeit kann bspw. die Qualität der Schnittfläche beim Scherschneiden verbessert werden.

Somit kann die Geschwindigkeitsübersetzungseinheit mittels eines Kolbens als das erste Verbindungsmittel direkt an der ersten Aktivelementaufnahme befestigt werden, da die koaxiale Anordnung der Kolben das Auftreten von auf die Kolben wirkenden Hebelkräften während der Bearbeitung des Werkstücks verhindert.

Vorzugsweise ist die Werkzeugmaschine zur Bearbeitung eines Metallwerkstücks und vorzugsweise zur Bearbeitung eines Halbzeugs, besonders vorzugsweise eines Blechs, insbesondere eines Stahlblechs, eingerichtet.

Dadurch können in einem Prozessschritt mehrere unterschiedliche Bearbeitungsschritte, bspw. Zerteilen und Umformen, in einer Werkzeugmaschine kombiniert werden, ohne Qualitätseinbußen auf Grund unterschiedlicher Anforderungen an die Aktivelementgeschwindigkeiten hinnehmen zu müssen oder die Schritte nacheinander durchzuführen und dadurch einen reduzierten Durchsatz an Werkstücken in Kauf nehmen zu müssen.

Vorzugsweise ist die Werkzeugmaschine als umformende Werkzeugmaschine ausgebildet.

Dies erlaubt es bspw. einen schnelle Aktivelementgeschwindigkeiten erfordernden Zerteilprozess mit einem langsamere Aktivelementgeschwindigkeiten erfordernden Umformprozess in einem gleichzeitig ausgeführten, durch die Bewegung einer gemeinsamen Aktivelementaufnahme initiierten Prozessschritt in einer Werkzeugmaschine zu kombinieren.

Durch die lösbare Verbindung zwischen Scherschneid- oder Umformaktivelementeinsatz und Aktivelementaufnahme kann der erfindungsgemäße Scherschneid- oder Umformaktivelementeinsatz gegen andere Scherschneid- oder Umformaktivelementeinsätze mit einer anderen Geschwindigkeitsübersetzung ausgetauscht werden, wodurch die Aktivelementgeschwindigkeit an unterschiedliche Werkstücke und Bearbeitungstechniken angepasst werden kann.

Vorzugsweise sind der erste Kolben und der zweite Kolben zylinderförmige Kolben, die koaxial angeordnet sind.

Durch die koaxiale Anordnung kann die Geschwindigkeitsübersetzungseinheit mittels eines Kolbens direkt an der Aktivelementaufnahme der Werkzeugmaschine befestigt werden, da die koaxiale Anordnung der Kolben das Auftreten von auf die Kolben wirkenden Hebelkräften während der Bearbeitung des Werkstücks verhindert. Ferner ermöglicht die Symmetrie, dass der Scherschneid- oder Umformaktivelementeinsatz beim Umrüsten um 180° gedreht eingesetzt werden kann, wodurch (in Abhängigkeit vom Werkstück) zwischen einer Reduktion und einer Erhöhung der Relativgeschwindigkeit zwischen den Aktivelementen gewählt werden kann.

Durch das erfindungsgemäße Verfahren können in einem Bearbeitungsschritt mehrere unterschiedliche Bearbeitungsverfahren gleichzeitig zur Anwendung kommen, ohne Qualitätseinbußen auf Grund unterschiedlicher Anforderungen an die Aktivelementgeschwindigkeit hinnehmen zu müssen.

Vorzugsweise wird das Werkstück mit dem ersten der zweiten Aktivelemente gelocht und mit dem zweiten der zweiten Aktivelemente plastisch verformt.

Dabei kann das erste der zweiten Aktivelemente mit einer höheren Geschwindigkeit gegen das Werkstück geführt werden als das zweite der zweiten Aktivelemente, wodurch beispielsweise die Gratbildung beim Scherschneiden reduziert werden kann, ohne die Qualität der Formgebung des Werkstücks durch das zweite der zweiten Aktivelemente zu verringern.

Die Verwendung eines hydraulischen Kraft-/Wegwandlers ermöglicht es, durch Wahl des Hydraulikfluidums die Krafteinwirkung auf das Werkstück und bei zyklischen Prozessen aufkeimende Schwingungen durch Wahl der Fluidführung im Kraft-/Wegwandler zu dämpfen.

Vorzugsweise sind der erste Kolben und der zweite Kolben koaxial angeordnet und besonders vorzugsweise sind der erste Kolben und der zweite Kolben zylinderförmig.

Somit kann ein Kolben des Kraft-/Wegwandler direkt an einer Aktivelementaufnahme der Vorrichtung befestigt werden, da die koaxiale Anordnung der Kolben das Auftreten von auf die Kolben wirkenden Hebelkräften während der Bearbeitung des Werkstücks verhindert.

Vorzugsweise umfasst das Werkstück Metall.

Vorzugseise ist das Werkstück als Halbzeug, besonders vorzugsweise als Blech, insbesondere als Stahlblech, ausgebildet.

### KURZBESCHREIBUNG DER ZEICHNUNGEN

Die Erfindung wird nachfolgend in der detaillierten Beschreibung anhand von Ausführungsbeispielen erläutert, wobei auf Zeichnungen Bezug genommen wird, in denen:
- Fig. 1: einen schematischen Längsschnitt einer ersten Werkzeugmaschine gemäß einer ersten bevorzugten Ausführungsform der vorliegenden Erfindung;
- Fig. 2: einen schematischen Querschnitt der ersten Werkzeugmaschine und eine Draufsicht auf ein durch die erste Werkzeugmaschine bearbeitetes erstes Werkstück;
- Fig. 3: einen schematischen Längsschnitt einer zweiten Werkzeugmaschine gemäß einer zweiten bevorzugten Ausführungsform der vorliegenden Erfindung;
- Fig. 4: einen schematischen Querschnitt der zweiten Werkzeugmaschine und eine Draufsicht auf ein durch die zweite Werkzeugmaschine bearbeitetes zweites Werkstück;
- Fig. 5: einen schematischen Querschnitt eines in der ersten oder zweiten Werkzeugmaschine einsetzbaren, geschwindigkeitsübersetzenden Scherschneid- oder Umformaktivelementeinsatzes; und
- Fig. 6: ein Flussdiagramm eines Prozesses zum Bearbeiten der Werkstücke zeigt.

Dabei sind in den Zeichnungen gleiche Elemente durch identische Bezugszeichen und analoge Elemente mit um einen Apostroph ergänzten, aber ansonsten identischen Bezugszeichen gekennzeichnet.

### DETAILLIERTE BESCHREIBUNG

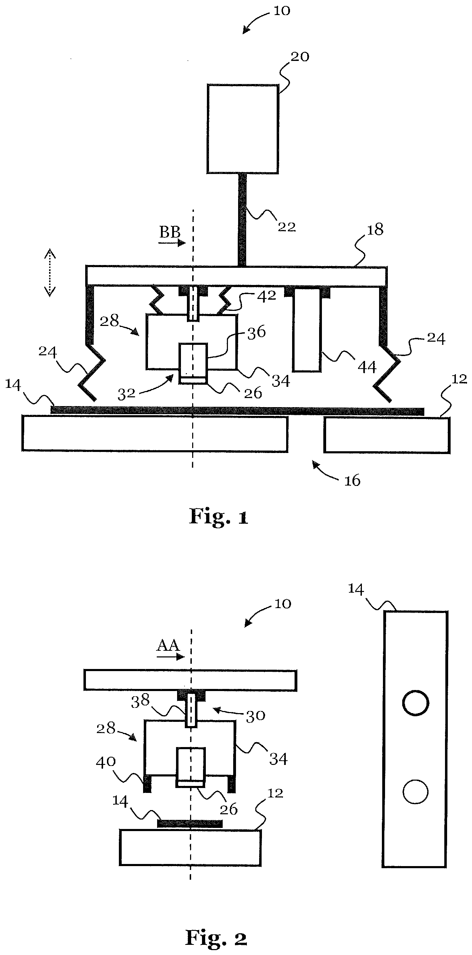

Fig. 1 und 2 zeigen einen schematischen Längsschnitt und einen schematischen Querschnitt einer ersten Werkzeugmaschine 10 gemäß einer ersten bevorzugten Ausführungsform der vorliegenden Erfindung entlang der Schnittebenen AA bzw. BB. Die Werkzeugmaschine 10 umfasst ein erstes Alctivelement 12 (im Folgenden auch als Werkstückauflage bezeichnet), auf dem ein flaches erstes Werkstück 14 angeordnet ist. Die Werkstückauflage 12 weist eine Aussparung 16 auf. Über der Werkstückauflage 12 ist eine erste Aktivelementaufnahme 18 angeordnet. Die erste Aktivelementaufnahme 18 steht mit einer Antriebseinheit 20 in Wirkverbindung. Die Antriebseinheit 20 umfasst einen Kurbeltrieb (nicht gezeigt) und eine mit dem Kurbeltrieb über ein Pleuellager (nicht gezeigt) verbundene Pleuelstange 22. Die Pleuelstange 22 setzt die kreisförmige Bewegung des Kurbeltriebs in eine Linearbewegung der Aktivelementaufnahme 18 um (in Fig. 1 durch einen gestrichelten Pfeil angedeutet). In diesem Zusammenhang sei zudem angemerkt, dass anstatt eines Kurbeltriebs mit Schwungrad in der Antriebseinheit auch andere Antriebskonzepte realisiert werden können, bspw. ein drehmomentstarker Torquemotor oder ein Hydraulikzylinder.

Die Antriebseinheit 20 ist dazu eingerichtet, die erste Aktivelementaufnahme 18 in einer ersten Phase eines Bewegungszyklus zur Werkstückauflage 12 hin gegen das erste Werkstück 14 und in einer zweiten Phase des Bewegungszyklus von der Werkstückauflage 12 weg zu führen. Wird die erste Aktivelementaufnahme 18 zur Werkstückauflage 12 hin geführt, setzen die Niederhalter 24 auf dem Werkstück 14 auf, wodurch das Werkstück 14 gegen die Werkstückauflage 12 gedrückt wird, so dass der resultierende Kraftschluss zwischen dem Werkstück 14 und der Werkstückauflage 12 das Werkstück 14 bei einer nachfolgenden aktiven Bearbeitung des Werkstücks 14 in einer vorbestimmten Position hält.

Zwischen einem zweiten Aktivelement 26, das bei der Bearbeitung des ersten Werkstücks 14 in direkten Kontakt mit dem Werkstück 14 kommt, und der ersten Aktivelementaufnahme 18, ist eine Geschwindigkeitsübersetzungseinheit 28 angeordnet, welche das zweite Aktivelement 26 mit der ersten Aktivelementaufnahme 18 koppelt. Die Geschwindigkeitsübersetzungseinheit 28 weist ein erstes Verbindungsmittel 30 und ein zweites Verbindungsmittel 32 auf, wobei das erste Verbindungsmittel 30 mit der ersten Aktivelementaufnahme 18 verbunden ist und das zweite Verbindungsmittel 32 eine zweite Aktivelementaufnahme ausbildet, an der das zweite Aktivelement 26 befestigt ist.

Die Geschwindigkeitsübersetzungseinheit 28 ist dazu eingerichtet, eine maximale Relativgeschwindigkeit zwischen der zweiten Aktivelementaufnahme und der Werkstückauflage 12 während der aktiven Bearbeitung des Werkstücks 14 (im Vergleich zu einer maximalen Relativgeschwindigkeit zwischen der ersten Aktivelementaufnahme 18 und der Werkstückauflage 12 während der aktiven Bearbeitung des Werkstücks 14) zu reduzieren.

Wie in Fig. 1 und 2 gezeigt, ist die Geschwindigkeitsübersetzungseinheit 28 als hydraulischer Kraft-/Wegwandler ausgebildet. Der hydraulische Kraft-/Wegwandler umfasst ein Gehäuse 34, dessen Gehäuseinnenraum mit einem Hydraulikfluidum (oder einem Gemisch verschiedener Hydraulikfluida) beaufschlagt ist. Das Gehäuse 34 weist ferner eine erste Aussparung auf, in der ein erster Kolben 36 angeordnet ist, der über ein Ende des ersten Kolbens 36 mit dem Hydraulikfluidum in Kontakt steht. Das Gehäuse 34 weist zudem eine zweite Aussparung auf, in der ein zweiter Kolben 38 angeordnet ist, der über ein Ende des zweiten Kolbens 38 mit dem Hydraulikfluidum in Kontakt steht. Der erste Kolben 36 ist koaxial zum zweiten Kolben 38 angeordnet, dessen Querschnittsfläche kleiner ist als die Querschnittsfläche des ersten Kolbens 36.

An dem Gehäuse 34 des hydraulischen Kraft-/Wegwandlers ist des Weiteren ein Distanzelement 40 angebracht, das dazu eingerichtet ist, die Bewegung des Gehäuses 34 in Richtung der Werkstückauflage 12 zu begrenzen, bevor das zweite Aktivelement 26 in Kontakt mit dem Werkstück 14 kommt und dieses aktiv bearbeitet. Ferner ist an dem Gehäuse 34 des hydraulischen Kraft-/Wegwandlers ein elastisches Rückstellelement 42 angebracht, das dazu eingerichtet ist, das Gehäuses 34 in einem definierten Abstand zur ersten Aktivelementaufnahme 18 zu halten bzw. das Gehäuses 34 in den definierten Abstand zur ersten Aktivelementaufnahme 18 zu bringen. Alternativ zu dem Distanzelement 40 und dem elastischen Rückstellelement 42 kann das Gehäuse 34 auch unmittelbar mit dem Rahmen der Werkzeugmaschine 10, bspw. mittels umlaufender Absätze (nicht gezeigt) an der Außenseite des Gehäuses 34 verbunden sein, so dass das Gehäuse 34 des hydraulischen Kraft-/Wegwandlers während der Bearbeitung des Werkstücks 14 in einer festen Lagebeziehung zum Rahmen verbleibt, d. h. ruht.

Wird die erste Aktivelementaufnahme 18 in Richtung der Werkstückauflage 12 geführt, setzt das Distanzelement 40 auf der Werkstückauflage 12 auf. Durch das Aufsetzen des Distanzelements 40 wird durch die fortgesetzte Bewegung der ersten Aktivelementaufnahme 18 der zweite Kolben 38 in das Gehäuse 34 gedrückt, wobei der erste Kolben 36 auf Grund der unterschiedlichen Querschnittsflächen jedoch nur mit einer im Vergleich zur ersten Aktivelementaufnahme 18 reduzierter Geschwindigkeit relativ zur Werkstückauflage 12 aus dem Gehäuse 34 herausgedrückt wird. Somit wird das zweite Aktivelement 26 in der aktiven Bearbeitungsphase mit einer geringeren Geschwindigkeit gegen das Werkstück 14 geführt, als das zweite Aktivelement 44, das direkt mit der ersten Aktivelementaufnahme 18 verbunden ist.

Nach dem Umformen des Werkstücks 14 durch das zweite Aktivelement 26 und dem Lochen durch das zweite Aktivelement 44 wird die erste Aktivelementaufnahme 18 von der Werkstückauflage 12 weggeführt. Wenn das Distanzelement 40 von der Werkstückauflage 12 abhebt, kehrt das Gehäuse 34 getrieben von dem elastisches Rückstellelement 42 in seine Ausgangslage zurück.

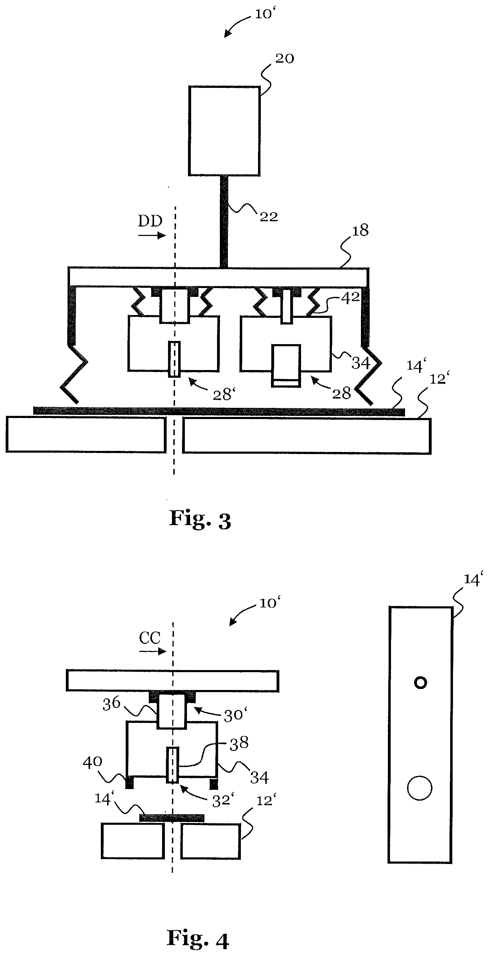

Fig. 3 und 4 zeigen einen schematischen Längsschnitt und einen schematischen Querschnitt einer zweiten Werkzeugmaschine 10' gemäß einer zweiten bevorzugten Ausführungsform der vorliegenden Erfindung entlang der Schnittebenen CC bzw. DD. Die zweite Werkzeugmaschine 10' umfasst, wie die erste Werkzeugmaschine 10, die Antriebseinheit 20, die Pleuelstange 22 und die erste Aktivelementaufnahme 18. Jedoch ist an den einstellbaren Befestigungsmitteln der ersten Aktivelementaufnahme 18 neben der ersten Geschwindigkeitsübersetzungseinheit 28, anstatt des zweiten Aktivelements 44, eine zweite Geschwindigkeitsübersetzungseinheit 28' angeordnet. In diesem Zusammenhang sei jedoch darauf hingewiesen, dass in weiteren Ausführungsformen die zweite Geschwindigkeitsübersetzungseinheit 28' auch zusätzlich zum zweiten Aktivelement 44 an der ersten Aktivelementaufnahme 18 befestigt sein kann.

Die zweite Geschwindigkeitsübersetzungseinheit 28' entspricht im Aufbau der ersten Geschwindigkeitsübersetzungseinheit 28, ist jedoch um 180° gedreht eingebaut, so dass der erste Kolben 36 als erstes Verbindungsmittel 30' mit der ersten Aktivelementaufnahme 18 verbunden ist und der zweite Kolben 38 als zweites Verbindungsmittel 32' eine zweite Aktivelementaufnahme ausbildet, in die ein weiteres zweites Aktivelement integriert ist. Ferner sind das Distanzelement 40 und das elastische Rückstellelement 42 an entsprechenden Stellen der um 180° gedreht eingebauten zweiten Geschwindigkeitsübersetzungseinheit 28' angebracht.

Wird die erste Aktivelementaufnahme 18 in Richtung der modifizierten Werkstückauflage 12' geführt, setzt das Distanzelement 40 auf der Werkstückauflage 12' auf. Durch das Aufsetzen des Distanzelements 40 wird der erste Kolben 36 in das Gehäuse 34 gedrückt, wodurch der zweite Kolben 38 mit einer im Vergleich zur ersten Aktivelementaufnahme 18 erhöhten Geschwindigkeit relativ zur Werkstückauflage 12' aus dem Gehäuse 34 herausgedrückt wird. Somit wird das weitere zweite Aktivelement mit einer höheren Geschwindigkeit gegen das zweite Werkstück 14' geführt, als das zweite Aktivelement 26 oder ein zweites Aktivelement, das direkt mit der ersten Aktivelementaufnahme 18 verbunden wäre.

Nach dem Umformen des zweiten Werkstücks 14' durch das zweite Aktivelement 26 und dem Lochen durch das weitere zweite Aktivelement wird die erste Aktivelementaufnahme 18 von der Werkstückauflage 12' weggeführt. Wenn das Distanzelement 40 von der Werkstückauflage 12' abhebt, kehren die Gehäuse 34, getrieben von den elastischen Rückstellelementen 42, in ihre Ausgangslagen zurück.

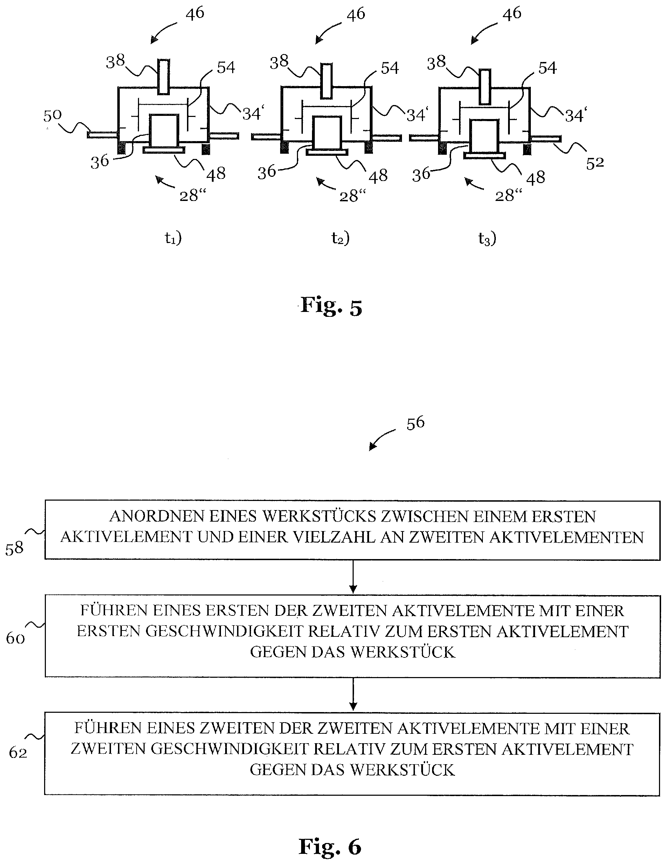

Fig. 5 zeigt einen Querschnitt eines weiteren, in der ersten Werkzeugmaschine 10 oder der zweiten Werkzeugmaschine 10' zusätzlich oder alternativ einsetzbaren, geschwindigkeitsübersetzenden Scherschneid- oder Umformaktivelementeinsatzes 46, zu verschiedenen Zeitpunkten (in Fig. 5 als t₁ bis t₃ gekennzeichnet) während einer Bearbeitungsphase. Der Scherschneid- oder Umformaktivelementeinsatz 46 umfasst eine dritte Geschwindigkeitsübersetzungseinheit 28", die wie die erste Geschwindigkeitsübersetzungseinheit 28 und die zweite Geschwindigkeitsübersetzungseinheit 28' als hydraulischer Kraft-/Wegwandler ausgebildet ist.

Der hydraulische Kraft-/Wegwandler der dritten Geschwindigkeitsübersetzungseinheit 28" umfasst wie der hydraulische Kraft-/Wegwandler der ersten Geschwindigkeitsübersetzungseinheit 28 oder der hydraulische Kraft-/Wegwandler der zweiten Geschwindigkeitsübersetzungseinheit 28', ein Gehäuse 34', dessen Gehäuseinnenraum mit einem Hydraulikfluidum beaufschlagt ist. Analog zu dem im Zusammenhang mit Fig. 1 und 2 Beschriebenen weist das Gehäuse 34' eine erste Aussparung, in der ein zylinderförmiger, erster Kolben 36 angeordnet ist, der über ein Ende des ersten Kolbens 36 mit dem Hydraulikfluidum in Kontakt steht, und eine zweite Aussparung, in der ein zylinderförmiger, zweiter Kolben 38 angeordnet ist, der über ein Ende des zweiten Kolbens 38 mit dem Hydraulikfluidum in Kontakt steht, auf.

Der erste zylinderförmige Kolben 36 ist koaxial zum zweiten zylinderförmigen Kolben 38 angeordnet, dessen Durchmesser kleiner ist als der Durchmesser des ersten Kolbens 36. Zudem ist am ersten Kolben 36 als zweites Aktivelement 26 ein Scherschneid- oder Umformstempel 48 angebracht bzw. der erste Kolben 36 ist als Scherschneid- oder Umformstempel 48 ausgebildet. In diesem Zusammenhang sei jedoch darauf verwiesen, dass bei (um 180°) gedrehtem Einbau der Scherschneid- oder Umformstempel 48 ebenso am zweiten Kolben 38 angebracht bzw. der zweite Kolben 38 als Scherschneid- oder Umformstempel 48 ausgebildet sein kann.

Ferner sind an dem Gehäuse 34' ein Zulauf 50 und ein Ablauf 52 angeordnet, durch die das Hydraulikfluidum in den Gehäuseinnenraum gefüllt werden kann, bzw. ein in dem Gehäuseinnenraum befindliches Hydraulikfluidum gegen ein Hydraulikfluidum mit größerer oder geringerer Kompressibilität ausgetauscht werden kann, um die Dämpfungseigenschaften der Geschwindigkeitsübersetzungseinheit 28" an unterschiedliche Bearbeitungsszenarien anzupassen. In diesem Zusammenhang sei auch darauf hingewiesen, dass ein Hinzuführen oder Abführen des Hydraulikfluidums auch dazu genutzt werden kann, die Maximalauslenkung des zweiten Aktivelements 26 einzustellen bzw. während des Betriebs zu steuern. Des Weiteren ist in dem Gehäuse 34' eine Fluidführung 54 vorgesehen, die dazu eingerichtet ist, bei zyklischen Prozessen aufkeimende Schwingungen zu dämpfen. Bspw. kann die Fluidführung 54 einen Fluidkanal zwischen dem ersten Kolben 36 und dem zweiten Kolben 38 ausbilden, der eine auf eine Bearbeitungsfrequenz abgestimmte Länge und/oder einen auf die Bearbeitungsfrequenz abgestimmten, sich windenden Pfad aufweist.

Fig. 6 zeigt ein Flussdiagramm des oben beschriebenen Prozesses 56 zum Bearbeiten des Werkstücks 14, 14'. Nach dem Anordnen des Werkstücks 14, 14' auf der Werkstückauflage 12, 12', werden die zweiten Aktivelemente 26, 44 gegen das erste oder zweite Werkstück 14, 14', bspw. ein Halbzeug wie z. B. ein Stahlblech oder ein anderes Erzeugnis umfassend z. B. Kupfer, Aluminium oder Edelstahl, oder Faserverbund-Werkstoffe, Kunststoffe, Naturfasern, Keramiken, etc. geführt, wobei durch den Einsatz einer oder mehrerer der Geschwindigkeitsübersetzungseinheiten 28, 28' und 28" erreicht wird, dass unterschiedliche zweite Aktivelemente 26, 44 mit unterschiedlichen Geschwindigkeiten relativ zur Werkstückauflage (Matrize) 12, 12' gegen das erste oder zweite Werkstück 14, 14' geführt werden.

Bei einer Umrüstung der Werkzeugmaschine 10, 10' kann ferner eine oder können mehrere der Geschwindigkeitsübersetzungseinheiten 28, 28' und 28" um 180° gedreht eingesetzt werden, oder ein verwendetes Hydraulikfluidum gegen ein Hydraulikfluidum mit größerer oder geringerer Kompressibilität ausgetauscht werden, um den Prozess 56 an unterschiedliche Bearbeitungsszenarien anzupassen.

### BEZUGSZEICHENLISTE

- 10, 10': Werkzeugmaschine
- 12, 12': erstes Aktivelement, Werkstückauflage
- 14, 14': Werkstück
- 16: Aussparung
- 18: erste Aktivelementaufnahme
- 20: Antriebseinheit
- 22: Pleuelstange
- 24: Niederhalter
- 26: zweites Aktivelement
- 28, 28', 28": Geschwindigkeitsübersetzungseinheit
- 30, 30': Verbindungsmittel
- 32, 32': Verbindungsmittel
- 34, 34': Gehäuse
- 36: erster Kolben
- 38: zweiter Kolben
- 40: Distanzelement
- 42: Rückstellelement
- 44: zweites Aktivelement
- 46: Scherschneid- oder Umformaktivelementeinsatz
- 48: Scherschneid- oder Umformstempel
- 50: Zulauf
- 52: Ablauf
- 54: Fluidführung
- 56: Prozess
- 58-62: Prozessschritte

## Patentansprüche

1. Werkzeugmaschine (10, 10'), umfassend:
ein erstes Aktivelement (12, 12');
eine erste Aktivelementaufnahme (18);
eine mit der ersten Aktivelementaufnahme (18) in Wirkverbindung stehende Antriebseinheit (20), welche dazu eingerichtet ist, die erste Aktivelementaufnahme (18) in einer ersten Phase eines Bewegungszyklus zum ersten Aktivelement (12, 12') hin gegen ein Werkstück (14, 14') und in einer zweiten Phase des Bewegungszyklus von dem ersten Aktivelement (12, 12') weg zu führen; und
mindestens eine Geschwindigkeitsübersetzungseinheit (28, 28', 28"), aufweisend ein erstes und ein zweites Verbindungsmittel (30, 30', 32, 32'), wobei das erste Verbindungsmittel (30, 30') mit der ersten Aktivelementaufnahme (18) verbunden ist und das zweite Verbindungsmittel (32, 32') eine zweite Aktivelementaufnahme ausbildet,
**dadurch gekennzeichnet, dass**
die mindestens eine Geschwindigkeitsübersetzungseinheit (28, 28', 28") als hydraulischer Kraft-/Wegwandler ausgebildet ist, wobei der Kraft-/Wegwandler ein Gehäuse (34, 34'), dessen Gehäuseinnenraum mit einem Hydraulikfluidum beaufschlagt ist, einen über ein Kolbenende mit dem Hydraulikfluidum in Kontakt stehenden, vorzugsweise zylinderförmigen, ersten Kolben (36), und einen über ein Kolbenende mit dem Hydraulikfluidum in Kontakt stehenden, vorzugsweise zylinderförmigen, zweiten Kolben (38) umfasst, dessen Querschnittsfläche kleiner ist als die Querschnittsfläche des ersten Kolbens (36), wobei der erste Kolben (36) oder der zweite Kolben (38) dazu eingerichtet ist, als erstes Verbindungsmittel (30, 30') mit der Aktivelementaufnahme (18) der Werkzeugmaschine (10, 10') lösbar verbunden zu sein und der andere Kolben (38, 36) als zweites Verbindungsmittel (30, 30', 32, 32') die zweite Aktivelementaufnahme ausbildet.

2. Werkzeugmaschine (10, 10') nach Anspruch 1, wobei die mindestens eine Geschwindigkeitsübersetzungseinheit (28, 28', 28") dazu eingerichtet ist, eine maximale Relativgeschwindigkeit zwischen der zweiten Aktivelementaufnahme und dem ersten Aktivelement (12, 12') während der ersten Phase des Bewegungszyklus im Vergleich zu einer maximalen Relativgeschwindigkeit zwischen der ersten Aktivelementaufnahme (18) und dem ersten Aktivelement (12, 12') während der ersten Phase des Bewegungszyklus zu reduzieren oder zu erhöhen.

3. Werkzeugmaschine (10, 10') nach Anspruch 1 oder 2, wobei der zweite Kolben koaxial zum ersten Kolben (36) angeordnet ist.

4. Werkzeugmaschine (10, 10') nach einem der Ansprüche 1 bis 3, wobei die Werkzeugmaschine (10, 10') zur Bearbeitung eines Metallwerkstücks und vorzugsweise zur Bearbeitung eines Halbzeugs eingerichtet ist.

5. Werkzeugmaschine (10, 10') nach einem der Ansprüche 1 bis 4, wobei die Werkzeugmaschine (10, 10') als umformende Werkzeugmaschine ausgebildet ist.

6. Geschwindigkeitsübersetzender Scherschneid- oder Umformaktivelementeinsatz (46) für eine Werkzeugmaschine (10, 10') nach Anspruch 1, welcher dazu eingerichtet ist, mit einer Aktivelementaufnahme (18) der Werkzeugmaschine (10, 10') lösbar verbunden zu sein,
**dadurch gekennzeichnet, dass**
der geschwindigkeitsübersetzende Scherschneid- oder Umformaktivelementeinsatz (46) eine Geschwindigkeitsübersetzungseinheit (28, 28', 28") aufweist, die als hydraulischer Kraft-/Wegwandler ausgebildet ist, wobei der Kraft-/Wegwandler ein Gehäuse (34, 34') umfasst, dessen Gehäuseinnenraum mit einem Hydraulikfluidum beaufschlagt ist, und der Kraft-/Wegwandler einen über ein Kolbenende mit dem Hydraulikfluidum in Kontakt stehenden ersten Kolben (36), und einen über ein Kolbenende mit dem Hydraulikfluidum in Kontakt stehenden zweiten Kolben (38) umfasst, dessen Querschnittsfläche kleiner ist als die Querschnittsfläche des ersten Kolbens (36), wobei der erste oder der zweite Kolben (36, 38) dazu eingerichtet ist, mit der Aktivelementaufnahme (18) der Werkzeugmaschine (10, 10') lösbar verbunden zu sein und der verbleibende Kolben (36, 38) einen Scherschneid- oder Umformstempel (48) umfasst.

7. Geschwindigkeitsübersetzender Scherschneid- oder Umformaktivelementeinsatz (46) nach Anspruch 6, wobei der erste Kolben (36) und der zweite Kolben (38) zylinderförmige Kolben sind, die koaxial angeordnet sind.

8. Verfahren (56), umfassend:
Bearbeiten eines Werkstücks (14, 14'), welches zwischen einem ersten Aktivelement (12, 12') und einer Vielzahl an zweiten Aktivelementen (26, 44) einer Werkzeugmaschine (10, 10') angeordnet ist;
wobei
das erste der zweiten Aktivelemente (26, 44) über einen hydraulischen Kraft-/Wegwandler mit einer ersten Aktivelementaufnahme (18) der Werkzeugmaschine (10, 10') gekoppelt ist,
wobei der hydraulische Kraft-/Wegwandler ein Gehäuse (34, 34') umfasst, dessen Gehäuseinnenraum mit einem Hydraulikfluidum beaufschlagt ist, und der Kraft-/Wegwandler einen über ein Kolbenende mit dem Hydraulikfluidum in Kontakt stehenden ersten Kolben (36) und einen über ein Kolbenende mit dem Hydraulikfluidum in Kontakt stehenden zweiten Kolben (38) umfasst, dessen Querschnittsfläche kleiner ist als die Querschnittsfläche des ersten Kolbens (36),
wobei der erste Kolben (36) oder der zweite Kolben (38) dazu eingerichtet ist, mit der Aktivelementaufnahme (18) der Werkzeugmaschine (10, 10') lösbar verbunden zu sein,
das erste der zweiten Aktivelemente (26, 44) in einem Bewegungszyklus mit einer ersten Geschwindigkeit relativ zum ersten Aktivelement (12, 12') gegen das Werkstück (14, 14') geführt (60) wird; und
ein zweites der zweiten Aktivelemente (26, 44) in dem Bewegungszyklus mit einer zweiten Geschwindigkeit relativ zum ersten Aktivelement (12, 12') gegen das Werkstück (14, 14') geführt (62) wird;
wobei die erste Geschwindigkeit und die zweite Geschwindigkeit unterschiedlich sind.

9. Verfahren (56) nach Anspruch 8, wobei das Werkstück (14, 14') mit dem ersten der zweiten Aktivelemente (26, 44) gelocht und mit dem zweiten der zweiten Aktivelemente (26, 44) plastisch verformt wird.

10. Verfahren (56) nach Anspruch 8 oder 9, wobei der erste Kolben (36) und der zweite Kolben (38) koaxial angeordnet sind und der erste Kolben (36) und der zweite Kolben (38) vorzugsweise zylinderförmig sind.

11. Verfahren (56) nach einem der Ansprüche 8 bis 10, wobei das Werkstück (14, 14') Metall umfasst.

12. Verfahren (56) nach Anspruch 11, wobei das Werkstück (14, 14') als Halbzeug, vorzugsweise als Blech, insbesondere als Stahlblech, ausgebildet ist.

## Claims

1. A machine tool (10, 10') comprising:
a first active element (12, 12');
a first active element receptacle (18);
a drive unit (20) operatively connected to the first active element receptacle (18) and configured to guide the first active element receptacle (18) in a first phase of a motion cycle towards the first active element (12, 12') against a workpiece (14, 14') and in a second phase of the motion cycle away from the first active element (12, 12'); and
at least one speed translation unit (28, 28', 28") having a first and a second connecting means (30, 30', 32, 32') wherein the first connecting means (30, 30') is connected to the first active element receptacle (18) and the second connecting means (32, 32') forms a second active element receptacle,
**characterized in that**
the at least one speed translation unit (28, 28', 28") is designed as a hydraulic force/distance transducer, wherein the force/distance transducer comprises a housing (34, 34'), the housing interior of which is loaded with a hydraulic fluid, a preferably cylindrical first piston (36), which is in contact with the hydraulic fluid via a piston end, and a preferably cylindrical second piston (38) which is in contact with the hydraulic fluid via a piston end and the cross-sectional area of which is smaller than the cross-sectional area of the first piston (36), wherein the first piston (36) or the second piston (38) is configured to be detachably connected as a first connecting means (30, 30') to the active element receptacle (18) of the machine tool (10, 10') and the other piston (38, 36) forms the second active element receptacle as a second connecting means (30, 30', 32, 32').

2. The machine tool (10, 10') of claim 1, wherein the at least one speed translation unit (28, 28', 28") is configured to reduce or increase a maximum relative speed between the second active element receptacle and the first active element (12, 12') during the first phase of the motion cycle compared to a maximum relative speed between the first active element receptacle (18) and the first active element (12, 12') during the first phase of the motion cycle.

3. The machine tool (10, 10') of claim 1 or 2, wherein the second piston is arranged coaxially to the first piston (36).

4. The machine tool (10, 10') of any one of claims 1 to 3, wherein the machine tool (10, 10') is configured for machining a metal workpiece and preferably for machining a semi-finished product.

5. The machine tool (10, 10') of any one of claims 1 to 4, wherein the machine tool (10, 10') is configured as a forming machine tool.

6. A speed-translating shear cutting or forming active element insert (46) for a machine tool (10, 10') of claim 1, which is configured to be detachably connected to an active element receptacle (18) of the machine tool (10, 10'),
**characterized in that**
the speed-translating shear cutting or forming active element insert (46) has a speed translation unit (28, 28', 28") which is designed as a hydraulic force/distance transducer, wherein the force/distance transducer comprises a housing (34, 34') the housing interior of which is loaded with a hydraulic fluid, and the force/distance transducer comprises a first piston (36) in contact with the hydraulic fluid via a piston end, and a second piston (38) in contact with the hydraulic fluid via a piston end, the cross-sectional area of which is smaller than the cross-sectional area of the first piston (36), wherein the first or the second piston (36, 38) is configured to be detachably connected to the active element receptacle (18) of the machine tool (10, 10') and the remaining piston (36, 38) comprises a shear cutting or forming stamp (48).

7. The speed-translating shear cutting or forming active element insert (46) of claim 6, wherein the first piston (36) and the second piston (38) are coaxially arranged, cylindrical pistons.

8. A method (56) comprising:
machining a workpiece (14, 14') which is arranged between a first active element (12, 12') and a plurality of second active elements (26, 44) of a machine tool (10, 10');
wherein the first of the second active elements (26, 44) is coupled to a first active element receptacle (18) of the machine tool (10, 10') via a hydraulic force/distance transducer,
wherein the hydraulic force/distance transducer comprises a housing (34, 34') the housing interior of which is loaded with a hydraulic fluid, and the force/distance transducer comprises a first piston (36) in contact with the hydraulic fluid via a piston end and a second piston (38) in contact with the hydraulic fluid via a piston end, the cross-sectional area of which is smaller than the cross-sectional area of the first piston (36),
wherein the first piston (36) or the second piston (38) is configured to be detachably connected to the active element receptacle (18) of the machine tool (10, 10'),
the first of the second active elements (26, 44) is guided (60) in a motion cycle at a first speed relative to the first active element (12, 12') against the workpiece (14, 14'); and
a second of the second active elements (26, 44) is guided (62) in the motion cycle at a second speed relative to the first active element (12, 12') against the workpiece (14, 14');
wherein the first speed and the second speed are different.

9. The method (56) of claim 8, wherein the workpiece (14, 14') is perforated with the first of the second active elements (26, 44) and plastically deformed with the second of the second active elements (26, 44).

10. The method (56) of claim 8 or 9, wherein the first piston (36) and the second piston (38) are coaxially arranged, and the first piston (36) and the second piston (38) are preferably cylindrical.

11. The method (56) of any of claims 8 to 10, wherein the workpiece (14, 14') comprises metal.

12. The method (56) of claim 11, wherein the workpiece (14, 14') is formed as a semi-finished product, preferably as a sheet metal, in particular as a steel sheet.

## Revendications

1. Machine-outil (10, 10') comprenant :
un premier élément actif (12, 12') ;
un premier logement d'élément actif (18) ;
une unité de travail (20) en liaison fonctionnelle avec le premier logement d'élément actif (18), qui est conçue pour guider le premier logement d'élément actif (18), dans une première phase d'un cycle de déplacement, vers le premier élément actif (12, 12') contre une pièce (14, 14') et, dans une deuxième phase du cycle de déplacement, loin du premier élément actif (12, 12') ; et
au moins une unité de multiplication de vitesse (28, 28', 28") comprenant un premier et un deuxième moyens de liaison (30, 30', 32, 32'), dans lequel le premier moyen de liaison (30, 30') est relié avec le premier logement d'élément actif (18) et le deuxième moyen de liaison (32, 32') constitue un deuxième logement d'élément actif,
**caractérisé en ce que**
l'au moins une unité de multiplication de vitesse (28, 28', 28") est conçue comme un convertisseur de force/trajectoire hydraulique, dans lequel le convertisseur de force/trajectoire comprend un boîtier (34, 34'), dont l'intérieur est alimenté en fluide hydraulique, un premier piston (36), de préférence cylindrique, en contact par l'intermédiaire d'une extrémité de piston avec le fluide hydraulique, et un deuxième piston (38), de préférence cylindrique, en contact par l'intermédiaire d'une extrémité de piston avec le fluide hydraulique, dont la surface de section transversale est inférieure à la surface de section transversale du premier piston (36), dans lequel le premier piston (36) ou le deuxième piston (38) est conçu pour être relié de manière amovible, en tant que premier moyen de liaison (30, 30'), avec le logement d'élément actif (18) de la machine-outil (10, 10') et l'autre piston (38, 36) constitue, en tant que deuxième moyen de liaison (30, 30', 32, 32'), le deuxième logement d'élément actif.

2. Machine-outil (10, 10') selon la revendication 1, dans laquelle l'au moins une unité de multiplication de vitesse (28, 28', 28") est conçue pour réduire ou pour augmenter une vitesse relative maximale entre le deuxième logement d'élément actif et le premier élément actif (12, 12') pendant la première phase du cycle de déplacement par rapport à une vitesse relative maximale entre le premier logement d'élément actif (18) et le premier élément actif (12, 12') pendant la première phase du cycle de déplacement.

3. Machine-outil (10, 10') selon la revendication 1 ou 2, dans laquelle le deuxième piston est disposé de manière coaxiale par rapport au premier piston (36).

4. Machine-outil (10, 10') selon l'une des revendications 1 à 3, dans laquelle la machine-outil (10, 10') est conçue pour l'usinage d'une pièce métallique et de préférence pour l'usinage d'un produit semi-fini.

5. Machine-outil (10, 10') selon l'une des revendications 1 à 4, dans laquelle la machine-outil (10, 10') est conçue comme une machine-outil de déformation.

6. Insert d'élément actif de cisaillage ou de déformation multipliant la vitesse (46) pour une machine-outil (10, 10') selon la revendication 1, qui est conçu pour être relié de manière amovible avec un logement d'élément actif (18) de la machine-outil (10, 10'),
**caractérisé en ce que**
l'insert d'élément actif de cisaillage ou de déformation multipliant la vitesse (46) comprend une unité de multiplication de vitesse (28, 28', 28") qui est conçue comme un convertisseur de force/trajectoire hydraulique, dans lequel le convertisseur de force/trajectoire hydraulique comprend un boîtier (34, 34') dont l'intérieur est alimenté en fluide hydraulique, et le convertisseur de force/trajectoire hydraulique comprend un premier piston (36) en contact avec le fluide hydraulique par l'intermédiaire d'une extrémité de piston et un deuxième piston (38) en contact avec le fluide hydraulique par l'intermédiaire d'une extrémité de piston, dont la surface de section transversale est inférieure à la surface de section transversale du premier piston (36), dans lequel le premier ou le deuxième piston (36, 38) est conçu pour être relié de manière amovible avec le logement d'élément actif (18) de la machine-outil (10, 10') et le piston restant (36, 38) comprend un poinçon de cisaillage ou de déformation (48).

7. Insert d'élément actif de cisaillage ou de déformation multipliant la vitesse (46) selon la revendication 6, dans lequel le premier piston (36) et le deuxième piston (38) sont des pistons cylindriques qui sont disposés de manière coaxiale.

8. Procédé (56) comprenant :
usinage d'une pièce (14, 14') qui est disposée entre un premier élément actif (12, 12') et une pluralité de deuxièmes éléments actifs (26, 44) d'une machine-outil (10, 10') :
dans lequel le premier des deuxièmes éléments actifs (26, 44) est couplé, par l'intermédiaire d'un convertisseur de force/trajectoire hydraulique, avec un premier logement d'élément actif (18) de la machine-outil (10, 10'),
dans lequel le convertisseur de force/trajectoire hydraulique comprend un boîtier (34, 34') dont l'intérieur est alimenté en fluide hydraulique, et le convertisseur de force/trajectoire hydraulique comprend un premier piston (36) en contact avec le fluide hydraulique par l'intermédiaire d'une extrémité de piston et un deuxième piston (38) en contact avec le fluide hydraulique par l'intermédiaire d'une extrémité de piston, dont la surface de section transversale est inférieure à la surface de section transversale du premier piston (36),
dans lequel le premier piston (36) ou le deuxième piston (38) est conçu pour être relié de manière amovible avec le logement d'élément actif (18) de la machine-outil (10, 10'), le premier des deuxièmes éléments actifs (26, 44) est guidé (60), dans un cycle de déplacement, avec une première vitesse par rapport au premier élément actif (12, 12'), contre la pièce (14, 14') ; et
un deuxième des deuxièmes éléments actifs (26, 44) est guidé (62), dans le cycle de déplacement, avec une deuxième vitesse par rapport au premier élément actif (12, 12'), contre la pièce (14, 14') ;
dans lequel la première vitesse et la deuxième vitesse sont différentes.

9. Procédé (56) selon la revendication 8, dans lequel la pièce (14, 14') est percé avec le premier des deuxièmes éléments actifs (26, 44) et est déformée plastiquement avec le deuxième des deuxièmes éléments actifs (26, 44).

10. Procédé (56) selon la revendication 8 ou 9, dans lequel le premier piston (36) et le deuxième piston (38) sont disposés de manière coaxiale et le premier piston (36) et le deuxième piston (38) sont de préférence cylindriques.

11. Procédé (56) selon l'une des revendications 8 à 10, dans lequel la pièce (14, 14') comprend un métal.

12. Procédé (56) selon la revendication 11, dans lequel la pièce (14, 14') est conçue comme un produit semi-fini, de préférence sous la forme d'une tôle, plus particulièrement une tôle d'acier.
